# EUROPÄISCHE PATENTSCHRIFT

(11) **EP 1 452 148 B1**
(45) Veröffentlichungstag und Bekanntmachung des Hinweises auf die Patenterteilung: **15.04.2009**
(21) Anmeldenummer: 04003493.6
(22) Anmeldetag: 17.02.2004
(51) Int. Cl.: A61C 7/28

(54) **Bracket**
Bracket
Bracket

(30) Priorität: 27.02.2003 DE 10308795; 27.05.2003 DE 10324088
(43) Veröffentlichungstag der Anmeldung: 01.09.2004
(73) Patentinhaber: Heiser, Wolfgang, Dr. med., 6020 Innsbruck (AT)
(72) Erfinder: Heiser, Wolfgang, Dr. med., 6020 Innsbruck (AT)
(74) Vertreter: Strobel, Wolfgang

(56) Entgegenhaltungen:
- EP-A- 1 287 789
- US-A- 4 144 642
- US-A- 5 685 711

## Beschreibung

### Gebiet der Erfindung

Die Erfindung bezieht sich auf ein Bracket für kieferorthopädische Behandlungen, bestehend aus einer Grundplatte, die eine zur Befestigung an einem Zahn bestimmte Unterseite und eine Oberseite aufweist, auf der sich ein Aufbau erhebt, der zwei in gegenseitigem Abstand angeordnete Flügel aufweist, die jeweils von einem länglichen, beide Flügel fluchtend durchdringenden Schlitz unterbrochen sind, der die Flügel jeweils in einen gingivalen und einen inzisalen Abschnitt unterteilt und zur Aufnahme eines Richtdrahtes geeignet ist, und aus einer Schließfeder aus einem bandförmigen Material, die an dem Aufbau verankert ist, einen sich über die gingivalen Flügelabschnitte erstreckenden Bogen sowie einen sich an den Bogen anschließenden freien Schenkel aufweist und die zwischen einer Öffnungsstellung, in der der Schlitz in einem Bereich zwischen den Flügelabschnitten frei zugänglich ist, und einer Schließstellung, in der der freie Schenkel den Schlitz überdeckt, beweglich ist.

### Stand der Technik

Ein Bracket dieser Art ist beispielsweise aus US 5 562 444 bekannt. Bei dem bekannten Bracket ist an dem dem Schlitz abgewandten Ende des Bogens der Schließfeder ein verlängerter Schenkel ausgebildet, dessen freies Ende in einer breiten Kehle angeordnet ist, die an der Unterseite der von dem Bogen der Feder überdeckten gingivalen Flügelabschnitte ausgebildet ist. Diese Kehle hat einen großen Öffnungswinkel, der es erlaubt, die Schließfeder um die gingivalen Flügelabschnitte zwischen einer Öffnungs- und einer Schließstellung zu verschwenken, wobei der Scheitel der Kehle zusammen mit dem freien Ende des in der Kehle angeordneten Abschnitts der Schließfeder ein Schwenklager bildet. Sowohl in der Öffnungs- als auch in der Schließstellung hält sich die Feder an den von ihr überdeckten gingivalen Flügelabschnitten durch die ihr innewohnende Federkraft durch Klemmwirkung fest.

Allerdings hat sich in der Praxis herausgestellt, dass beim ungeschickten Öffnen der Feder diese mitunter über ihre Elastizitätsgrenze hinaus aufgebogen wird, so dass die Haltekraft leidet, mit der sie sich an den gingivalen Flügelabschnitten des Bracketaufbaus festhält. Sie kann dadurch leicht verloren gehen, da die Klemmkraft der Feder an den ihr benachbarten Flügelabschnitten das einzige Mittel ist, mit der sich die Feder an ihrem Platz sichert.

In der nämlichen Druckschrift ist auch ein Bracket beschrieben, bei dem die Feder an dem dem Schlitz abgewandten Ende des Bogens eine Verlängerung aufweist, die in zwei Schenkel gegabelt ist, die von Kanälen aufgenommen sind, die seitlich in dem Bracketaufbau unterhalb des Schlitzes, quer zu diesem, verlaufen. Auch bei diesem Bracket besteht die Gefahr einer zu großen Verbiegung der Feder, weil für die Verbiegung beim Öffnen der Feder nur ein Bogen von etwa 180° Bogenlänge zur Verfügung steht.

Ein dem letztgenannten Bracket ähnliches Bracket ist aus US 4 492 573 bekannt, das eine im wesentlichen U-förmig gebogene Schließfeder aufweist, die zum Öffnen des Schlitzes quer zu diesem in ihrer Gesamtheit verschoben werden kann.

Auch US 4 144 642 beschreibt ein Bracket mit einer Bügelfeder, die zum Öffnen und Schließen des Schlitzes zur Aufnahme eines Richtdrahtes quer zum Schlitz verschoben werden kann.

Aus EP 1 287 789 A2 ist ein kieferothopädisches Bracket bekannt, das ähnlich dem in der eingangs genannten US 5 562 444 aufgebaut ist. Bei ihm ist die Schließfeder an dem Bracketaufbau nicht nur verschwenkbar sondern in ihrer Schließstellung zusätzlich verschiebbar, vergleichbar der Situation bei US 4 492 573, wobei dann das freie Federende unter einen am inzisalen Flügel ausgebildeten Vorsprung gleiten kann.

US 5 685 711 beschreibt ein selbstligierendes kieferorthopädisches Bracket, dessen Schließfeder zwei im Wesentlichen parallel zueinander verlaufende Schenkel aufweist, von denen in der Schließstellung der eine den im Drahtaufnahmeschlitz angeordneten Richtdraht auf den Schlitzgrund drücken kann und der andere die Schließfeder durch Verrastung am Bracketaufbau in der Schließstellung sichert. Die beiden Schenkel der Schließfeder sind durch einen U-förmig gestalteten Bogen miteinander verbunden, der den einen Bestandteil eines Schwenkscharniers bildet, dessen anderer Bestandteil von zwei einander gleichachsig gegenüberstehenden Zapfen gebildet ist, die an dem Bracketaufbau ausgebildet sind Die Schließfeder muss während der Herstellung des Bracketaufbaus, der aus zwei spiegelbildlich ausgebildeten Hälften durch Laserschweißen zusammengesetzt wird an diesem angebracht werden, was nicht nur einen komplizierten Herstellungsvorgang erfordert, sondern auch einen nachträglichen Austausch der Schließfeder, etwa wenn diese im Gebrauch beschädigt werden sollte, unmöglich macht.

Allen vorgenannten Brackets ist gemeinsam, dass ihre Federn auf einen in den Schlitz eingelegten Richtdraht eine Kraft ausüben, wenn überhaupt, die auf den Schlitzgrund hin gerichtet ist, also den Richtdraht auf den Schlitzboden drückt. Die Federkraft ist dabei von der Steifigkeit des Federmaterials und der wirksamen Federlänge bestimmt, die in allen Beispielen relativ groß ist, da sie dem Abstand zwischen dem Einspannort der Feder und dem Angriffsort am Richtdraht entspricht. Nur wenn die Federsteifigkeit ausreichend groß ist, wird auch die erforderliche Schließkraft der Feder erzeugt, was wiederum die Gefahr eines plastischen Verbiegens der Feder beim Öffnen vergrößert.

Weiterhin ist eine Schließfeder, die den Richtdraht nur auf den Boden des Schlitzes drückt, zur Erzielung eines Drehmoments, das einen mit dem Bracket versehenen Zahn um eine Achse dreht, die auf Höhe der Krone des behandelten Zahns verläuft, weniger geeignet.

### Übersicht über die Erfindung

Der Erfindung liegt die Aufgabe zugrunde, ein Bracket der eingangs genannten Art anzugeben, das in der Lage ist, eine hohe Schließkraft zur Sicherung eines Richtdrahtes in dem Bracketschlitz zu erzeugen, ohne die Gefahr einer Beschädigung der Feder beim Öffnen zu erhöhen. Das Bracket sollte ggf. auch in der Lage sein, ein hohes Drehmoment um eine in Höhe einer Zahnkrone liegenden Achse zu entwickeln.

Diese Aufgabe wird gemäß der Erfindung dadurch gelöst, dass die von dem Bogen der Schließfeder überdeckten gingivalen Flügelabschnitte des Aufbaus an den einander zugewandten Seiten jeweils einen Vorsprung aufweisen, die Vorsprünge freie Enden haben, die sich in einem vorgegebenen Abstand einander gegenüber stehen, der freie Schenkel der Schließfeder im mittleren Bereich eine Zunge aufweist, die gegenüber benachbarten seitlichen Abschnitten im Wesentlichen rechtwinkelig in Richtung auf die Oberseite der Grundplatte abgewinkelt ist, die abgewinkelte Zunge wenigstens an ihrem freien Ende eine Breite hat, die kleiner ist, als der Abstand der einander gegenüberstehenden Flächen, die den Zwischenraum zwischen den gingivalen Flügelabschnitten begrenzen, im übrigen aber nicht breiter als an ihrem freien Ende ist.

Die dem zungenförmigen Abschnitt, nachfolgend der Einfachheit halber Zunge genannt, benachbarten seitlichen Abschnitte des freien Endes der Schließfeder sind somit einander parallele, federnde Fahnen, die sich über den Schlitz im Bracketaufbau erstrecken und in der Lage sind, einen darin eingelegten Richtdraht im Schlitz zu sichern. Weil das Ende der Zunge unter die genannten Vorsprünge greift, ist die Schließ- und Sicherungswirkung der Schließfeder fast ausschließlich durch die genannte Zunge, die Vorsprünge und die federnden Fahnen bestimmt und von den Eigenschaften des die gingivalen Flügelabschnitte umschließenden Federbogens weitestgehend unabhängig.

Die Zunge kann an ihrem freien Ende einen umgebogenen Abschnitt aufweisen, der im Schließzustand der Schließfeder unter die genannten Vorsprünge greift. Bei einer alternativen, besonders vorteilhaften Ausführungsform hat die Zunge einen an ihrer. Wurzel ansetzenden Halsbereich, der schmaler ist, als der gegenseitige Abstand der Vorsprünge, und an den Halsbereich schließt sich ein breiterer Endabschnitt an, dessen Breite größer ist, als der gegenseitige Abstand der Vorsprünge, aber kleiner als der Abstand der Seitenflächen der gingivalen Flügelabschnitte. Dieser breitere Endabschnitt liegt im Schließzustand der Schließfeder unter den beiden Vorsprüngen und sichert die Schließfeder gegen unbeabsichtigtes Öffnen.

Da die Dimensionen der Fahnen und der Zunge relativ klein sind, ist auch ihre wirksame Federlänge relativ klein. Um die wirksame Federlänge sowohl der Zunge als auch der Fahnen zu vergrößern, kann im Wurzelbereich der Zunge ein nicht abgewinkelter Abschnitt vorgesehen sein, der in der Ebene des freien Schenkels der Schließfeder liegt, gegenüber dieser aber beidseitig jeweils durch einen längslaufenden Einschnitt abgegrenzt ist.

Die Schließfeder weist vorzugsweise an einem dem freien Schenkel abgewandten Ende des Bogens einen Verlängerungsschenkel auf, der an dem Aufbau fest verankert ist. Zu diesem Zweck kann in dem Aufbau oberhalb der Oberseite der Grundplatte, jedoch unterhalb des Schlitzes, ein flacher, den Aufbau durchdringender, durchgehender Kanal ausgebildet sein, und der Verlängerungsschenkel der Feder, der schmaler als der Bogen ausgebildet ist, durchdringt den Kanal und steht an seinem freien Ende aus dem Kanal vor, wo er umgebogen ist, um den Verlängerungsschenkel und damit die gesamte Schließfeder an dem Aufbau zu sichern. Alternativ kann in dem Aufbau unterhalb des von dem Bogen der Feder überdeckten Flügels ein Einsteckschlitz ausgebildet sein, in den der Verlängerungsschenkel eingesteckt ist und in dem letzterer durch Verschweißung, Verlötung oder Verstemmung gesichert ist.

Es ist ferner vorteilhaft, wenn in der Schließfeder ein Loch benachbart der Zunge ausgebildet ist. Dieses Loch ist zur Aufnahme eines Werkzeugs in Form einer Nadel bestimmt, die zum Öffnen und Schließen der Schließfeder verwendet wird, indem sie durch das Loch gesteckt und mit ihrer Hilfe das umgebogene Ende der Zunge aus seiner Verrastung unter den Vorsprüngen gelöst wird.

Gemäß einer Weiterbildung der Erfindung sind an dem von dem Bogen der Schließfeder nicht überdeckten inzisalen Flügelabschnitten des Aufbaus benachbart dem Schlitz jeweils eine Schulter ausgebildet, auf der in der Schließstellung der Schließfeder die seitlichen Abschnitte des freien Schenkels der Schließfeder, d.h. die vorgenannten federnden Fahnen aufliegen können.

Wenn die Schließfeder in die Schließstellung vorgespannt ist, kann sie in der Öffnungsstellung gesichert werden, indem die Vorsprünge an den gingivalen Flügelabschnitten jeweils eine Oberseite aufweisen, die von einer Scheitelkante ausgehend in einer Richtung schräg geneigt ist, die sich von dem Schlitz weg erstreckt. Auf diese Schrägfläche kann das freie Ende der abgewinkelten Zunge in der Öffnungsstellung der Schließfeder abgestützt werden. Die Feder kann aber auch so ausgestaltet sein, dass sie unter Eigenspannung in eine Öffnungsstellung vorgespannt ist. Sie ist durch das umgebogene Ende der Zunge, das unter die Vorsprünge an den gingivalen Flügelabschnitten greift, gegen diese Vorspannung in der Schließstellung gehalten.

Um das Öffnen und Schließen der Feder auch dann zu ermöglichen, wenn Richtdrähte verwendet werden, deren Querschnitt die gesamte Breite des Schlitzes ausfüllt, ist zwischen den Vorsprüngen und dem Schlitz ein lichter Abstand vorhanden, der wenigstens so groß ist, wie die Dicke der Schließfeder.

### Kurzbeschreibung der Zeichnungen

Die Erfindung wird nachfolgend unter Bezugnahme auf in den Zeichnungen dargestellte Ausführungsbeispiele näher erläutert. Es zeigt:
Fig. 1 eine Draufsicht auf eine erste Ausführungsform eines vollständigen Bracket;
Fig. 2 eine Draufsicht auf die Grundplatte und den darauf sich erhebenden Aufbau des Bracket von Fig. 1;
Fig. 3 eine Draufsicht auf die Schließfeder für das Bracket nach den Fig. 1 und 2;
Fig. 4 eine perspektivische Ansicht einer besonders vorteilhaften Ausführungsform der Schließfeder mit vergrößerter wirksamer Länge der Zunge;
Fig. 5 einen Schnitt durch das Bracket von Fig. 1 längs der Linie V - V von Fig. 1 mit einem in den Schlitz eingelegten Richtdraht runden Querschnitts, der in Fig. 1 der Übersichtlichkeit halber weggelassen ist;
Fig. 6 einen Schnitt ähnlich Fig. 5 mit einem in den Schlitz eingelegten Richtdraht rechteckigen Querschnitts;
Fig. 7 einen Schnitt ähnlich Fig. 5 mit einem in den Schlitz eingelegten Richtdraht rechteckigen Querschnitts vergrößerter Höhe;
Fig. 8 eine der Fig. 5 vergleichbare Darstellung mit einem eingesetzten Öffnungswerkzeug beim Beginn des Öffnens,
Fig. 9 eine Darstellung ähnlich Fig. 8 beim Fortschreiten des Öffnens;
Fig. 10 eine Darstellung ähnlich Fig. 8 und 9 am Ende des Öffnungsvorgangs;
Fig. 11 bis Fig. 13 eine alternative Ausführungsform eines Bracket im Schnitt mit einem in den Schlitz eingelegten Richtdraht rechteckigen Querschnitts zur Erläuterung der Drehmomentwirkung, die der Richtdraht im Zusammenwirken mit der Schließfeder hervorbringt;
Fig. 14 eine seitliche Schnittdarstellung einer weiteren Ausführungsform mit Zunge, deren breiter Endabschnitt Ende unter die Vorsprünge greift, und
Fig. 15 eine perspektivische Darstellung des Brackets von Fig. 14 in geöffnetem Zustand der Schließfeder.

### Detaillierte Erläuterung der Erfindung

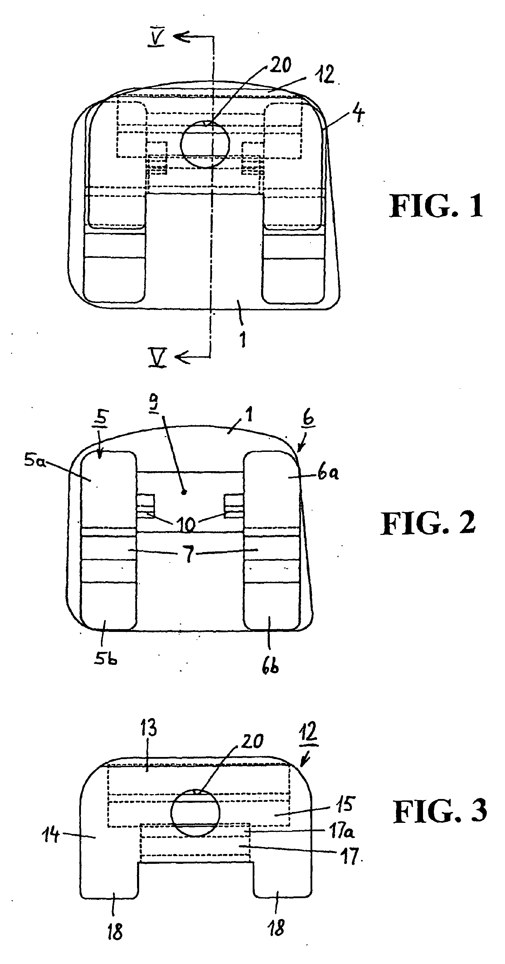

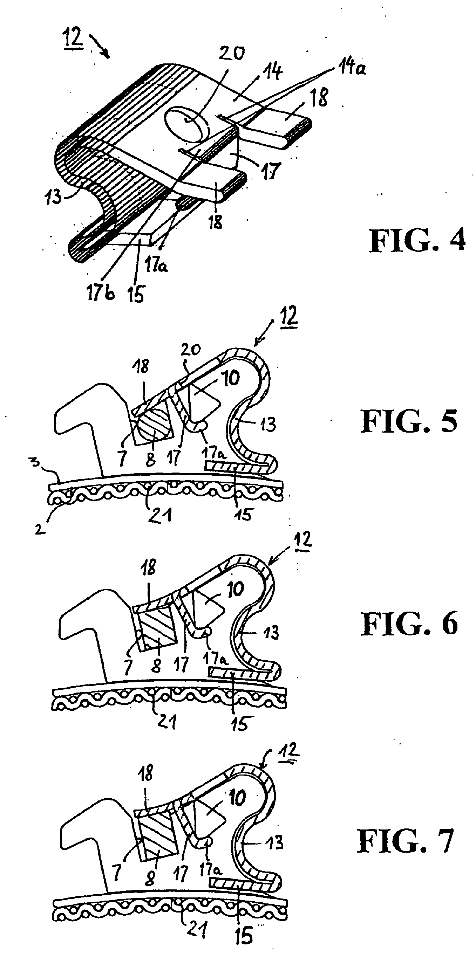

Nachfolgend wird die Erfindung anhand der Zeichnungen näher erläutert. Gemäß den Figuren 1 bis 3 besteht das Bracket aus einer Grundplatte 1, die eine Unterseite 2 (siehe Fig. 5) und eine Oberseite 3 aufweist, von der sich ein Aufbau erhebt, der insgesamt mit 4 bezeichnet ist. Die Grundplatte 1 hat einen unregelmäßigen Umriss, denn dieser ist an den Umriss der Krone eines Zahns angepasst, an dem das hier speziell dargestellte Bracket angebracht werden soll.

Der Aufbau 4 hat zwei sich in gegenseitigem Abstand gegenüberstehende mesiale und distale Flügel, die insgesamt mit 5 und 6 bezeichnet sind und die jeweils in gingivale und inzisale Abschnitte 5a, 6a bzw. 5b, 6b unterteilt sind. Die Abschnitte 5a und 5b sind in Fig. 5 am Beispiel des mesialen Flügels 5 deutlich voneinander unterscheidbar und durch einen zwischen ihnen verlaufenden Schlitz 7 voneinander getrennt, der zur Aufnahme eines Richtdrahtes 8 bestimmt ist, von dem Beispiele in den Figuren 5 bis 7 dargestellt sind.

Der Zwischenraum, der die mesialen und distalen Flügel 5 und 6 voneinander trennt, ist in Fig. 2 mit 9 bezeichnet und reicht bis dicht über die Oberseite 3 der Grundplatte 1, siehe hierzu Fig.5. In diesen Zwischenraum 9 erstrecken sich zwei nasenförmige Vorsprünge 10 von den gingivalen Flügelabschnitten 5a und 6a ausgehend aufeinander zu.

In dem gingivalen Abschnitt des Aufbaus 4 ist oberhalb der Grundplatte 1 ein flacher Schlitz ausgebildet, der sich im mittleren Bereich des Aufbaus 4 in diesen hinein erstreckt und der für die Aufnahme eines Endes einer zu dem Bracket gehörenden Schließfeder bestimmt ist. Details werden später erläutert.

Die gingivalen Flügelabschnitte 5a und 6a des Aufbaus 4 sind von einer schon erwähnten Schließfeder überdeckt, die insgesamt mit 12 bezeichnet ist. Die Schließfeder 12 ist als Einzelteil in Fig. 3und 4 dargestellt. Sie hat einen in mehreren Bögen verlaufenden Bogenabschnitt 13, an dessen einen, oberen Ende sich ein freier, weitgehend gerader Endabschnitt 14 anschließt und an dessen anderes, unteres Ende sich eine ebenfalls geradlinige Verlängerung 15 anschließt, die schmaler als die übrige Schließfeder 12 ausgebildet ist. Die Verlängerung 15 ist in den Schlitz 11 im Aufbau eingesteckt und darin durch Verschweißen, Verlöten oder Verstemmen gesichert. Die Schließfeder kann aus Metall oder Kunststoff bestehen.

Der gerade Endabschnitt 14 weist in seinem mittleren Bereich eine Zunge 17 auf, die beidseitig aus dem Material der Schließfeder ausgeklinkt und in Richtung auf die Grundplatte 1 des Bracket umgebogen ist, wie Fig. 4 deutlich zeigt. Die Zunge 17 ist in der Fig. 5 gezeigten Schließstellung der Feder 12 so gelegen, dass sie dem Schlitz 7 benachbart ist. Sie hat einen nach hinten umgebogenen Endabschnitt 17a, der tiefer als die der Oberseite 3 der Grundplatte 1 benachbarten Kante der Vorsprünge 10 liegt. Die seitlichen, nicht umgebogenen Fahnen 18 des geraden Endabschnitts 14 der Schließfeder 12 überdecken den Schlitz 7 und einen darin eingelegten Richtdraht (Fig. 5). Der Abstand zwischen einer den Schlitz 7 seitlich begrenzenden Wand und dem dieser benachbarten Vorsprung 10 ist wenigstens so groß wie die Dicke des Materials der Schließfeder 12.

In der Mitte weist die Schließfeder 12 eine Bohrung 20 auf, die zum Einführen eines stiftförmigen Werkzeugs, das beispielsweise auch ähnlich einer Häkelnadel ausgebildet sein kann, bestimmt ist.

In vorteilhafter Weise weist bei der Schließfeder 12, die in Fig. 4 dargestellt ist, die Zunge 17 einen Abschnitt 17b in ihrem Wurzelbereich, wo die Zunge 17 mit dem freien Schenkel 14 verbunden ist, auf, der gegenüber dem freien Schenkel 14 nicht abgewinkelt, von diesem jedoch beidseitig jeweils durch einen längslaufenden Schlitz oder Einschnitt 14a abgegrenzt ist. Durch diese Schlitze wird die für die Federung der Zunge 17 wirksame Länge der Zunge vergrößert, ohne dass sich an den übrigen Abmessungen der Schließfeder 12 etwas ändert. Die Vergrößerung der wirksamen Zungenlänge hilft, ein plastisches Verbiegen oder gar Abbrechen der Zunge 17 beim Einsetzen und Wechseln eines Richtdrahtes zu vermeiden. Außerdem werden die wirksamen Längen auch der Fahnen 18, die das freie Ende der Schließfeder 12 bilden, vergrößert, was ebenfalls einer plastischen Verbiegung entgegenwirkt.

Man erkennt in Fig. 5 ganz klar, dass die Schließfeder 12 an dem Bracketaufbau unverlierbar gesichert ist und in Folge des relativ weitläufig ausgelegten bogenförmigen Abschnitts 13 mit mehreren Bögen elastisch sehr weit ausbiegbar ist, ohne dass eine Gefahr besteht, dass die Feder 12 über ihre Elastizitätsgrenze hinaus gedehnt, das heißt überdehnt wird.

Dennoch wird eine große Sicherungswirkung an dem in den Schlitz 7 eingelegten Richtdraht 8 erzielt. Diese Sicherungswirkung wird nämlich maßgeblich durch die Zunge 17 und die Fahnen 18 bestimmt, weniger oder gar nicht durch den Federbogen 13. Wie ersichtlich, greift das untere Ende 17a der Zunge 17 unter die Vorsprünge 10 und hält die Feder in der Schließstellung. An der Wurzel der Zunge 17 beginnen die beiden Fahnen 18, die sich über den Richtdraht 8 erstrecken. Die gesamte Halte- und Sicherungsfunktion wird folglich in dem Bereich um die Zunge 17, die Fahnen 18 und die Vorsprünge 10 entwickelt, ohne dass die übrige Feder hierauf einen bedeutsamen Einfluss hat. Es ist daher sogar möglich, der Schließfeder 12 eine Vorspannung zu geben, die sie in entspanntem Zustand in eine Öffnungsstellung drückt, denn die Schließfeder wird ja durch die Zunge in ihrer Schließstellung gehalten, wenn sie einmal dorthin gebracht worden ist.

Der Grundaufbau des Bracket bestehend aus der Grundplatte 1 und dem Aufbau 4, wird vorzugsweise in einem Gieß- oder Spritzverfahren aus Metall oder einem geeigneten Kunststoff hergestellt. Die Schließfeder 12 wird durch Einschieben der Verlängerung 15 in den Schlitz 11 in Position gebracht und dann darin in schon beschriebener Weise gesichert.

Anzumerken ist noch, dass die Unterseite 2 der Grundplatte 1 dazu bestimmt ist, mit Hilfe eines Klebers oder Zements an der Krone eines Zahns befestigt zu werden. Dieser Kleber oder Zement ist in den Figuren 5 bis 7 mit dem Bezugszeichen 21 dargestellt.

Aus den Figuren 6 und 7 erkennt man im Vergleich mit Fig. 5 den Vorzug der Erfindung. In Fig. 5 ist in den Schlitz 7 ein Richtdraht 8 runden Querschnitts eingelegt, der den Schlitzquerschnitt nicht ausfüllt. Die Fahnen 18 liegen weitgehend spannungslos auf dem Richtdraht 8 auf. In Fig. 6 ist in den Schlitz 7 ein Richtdraht rechteckigen Querschnitts eingelegt, der den Schlitz in seiner vollen Höhe ausfüllt. Das hat zur Folge, dass sich die Fahnen 18 leicht nach oben verbiegen, wenn die Schließfeder durch Verrastung des unteren Zungenendes 17a unter den Vorsprüngen 10 in der Schließstellung gesichert wird. Gemäß Fig. 7 ist in den Schlitz 7 ein Richtdraht 8 rechteckigen Querschnitts eingelegt, der sich über den oberen Rand des Schlitzes 7 hinaus erhebt. Er hat zur Folge, dass die Fahnen 18 noch weiter nach oben durchgebogen sind, wenn die Feder 12, wie dargestellt, in der Schließstellung gesichert ist. Wir die Zeichnungen zeigen, bleibt die übrige Schließfeder von der Art des Sicherungszustandes im Bereich des Schlitzes vollkommen unbeeinflusst.

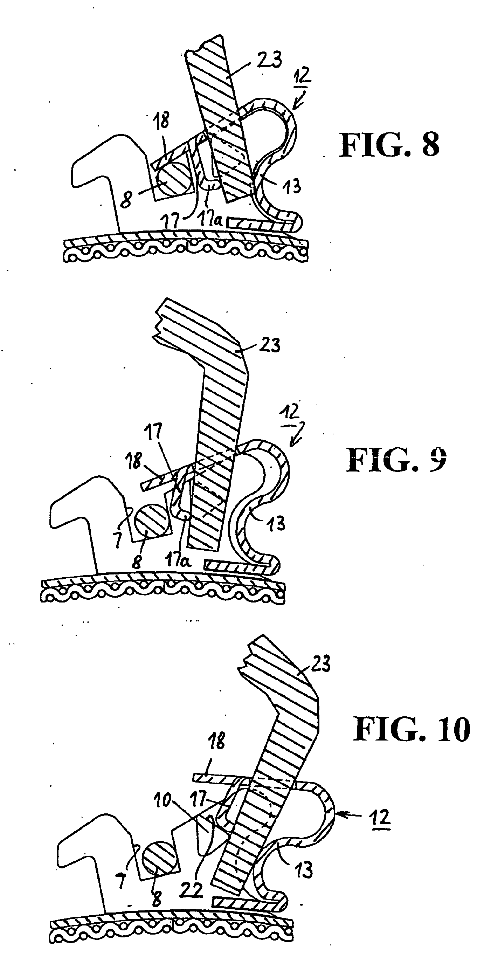

Unter Bezugnahme auf die Figuren 8 bis 10 werden nun weitere Vorzüge der Erfindung und der Verlauf des Öffnens der Schließfeder 12 erläutert. Der Einfachheit halber sind die bei Schnittdarstellungen üblichen Schraffuren weggelassen.

Fig. 8 zeigt das Bracket mit eingelegtem Richtdraht runden Querschnitts (als Beispiel) in einem der Fig. 5 vergleichbaren Zustand. Der nach hinten abgebogene Endabschnitt 17a der ausgeklinkten Zunge 17 der Schließfeder 12 liegt unter dem unteren, also der Grundplatte 1 nahen Rand der Vorsprünge 10. Die seitlichen Fahnen 18 der Schließfeder 12 liegen auf dem Richtdraht 8 auf. In das Loch 20 ist ein stiftförmiges Werkzeug 23 eingesteckt, das zwischen die Vorsprünge 10 eingeführt werden kann. Es berührt die freie Kante des umgebogenen Endes 17a der Zunge 17.

In Fig. 9 ist das Werkzeug 23 gegen die freie Kante des umgebogenen Endes 17a der Zunge 17 gedrückt und hat diese aus der Raststellung unter den Vorsprüngen 10 befreit. Mit Hilfe des Werkzeuges 23, d.h. durch leichtes weiteres Kippen desselben, kann nun die Schließfeder 12 weiter nach rückwärts gekippt werden, so dass die Fahnen 18 den Schlitz 7 vollkommen freigeben (Fig. 10). Biegt man die Schließfeder 12 ausreichend weit zurück, kann man das untere, umgebogene Ende 17a der Zunge 17 auf der Oberseite der Vorsprünge 10 absetzen. Wenn diese Oberseite 22 eine geeignete Neigung hat, die von einer Scheitelkante ausgehend in einer Richtung verläuft, die sich von dem Schlitz (7) weg erstreckt, sind die Vorsprünge 10 in der Lage, die Schließfeder 12 in der in Fig. 10 gezeigten Öffnungsstellung zu sichern, auch wenn die Schließfeder 12 eine in Schließrichtung wirksame Vorspannung hat.

Alternativ kann die Schließfeder eine in Öffnungsrichtung wirksame Vorspannung haben. Ein Abstützen der Zunge 17 auf den Vorsprüngen 10 ist dann nicht zwingend erforderlich. Jedenfalls sieht man aus diesen beiden Alternativen, dass es für die Sicherungswirkung der Fahnen 18 und der Zunge 17 an dem Richtdraht 8 nicht auf eine bestimmte Vorspannung der Schließfeder 12 ankommt, entscheidend ist allein die Materialkonstante und die Dimensionierung im Bereich von Fahnen 18, Zunge 17 und Vorsprüngen 10.

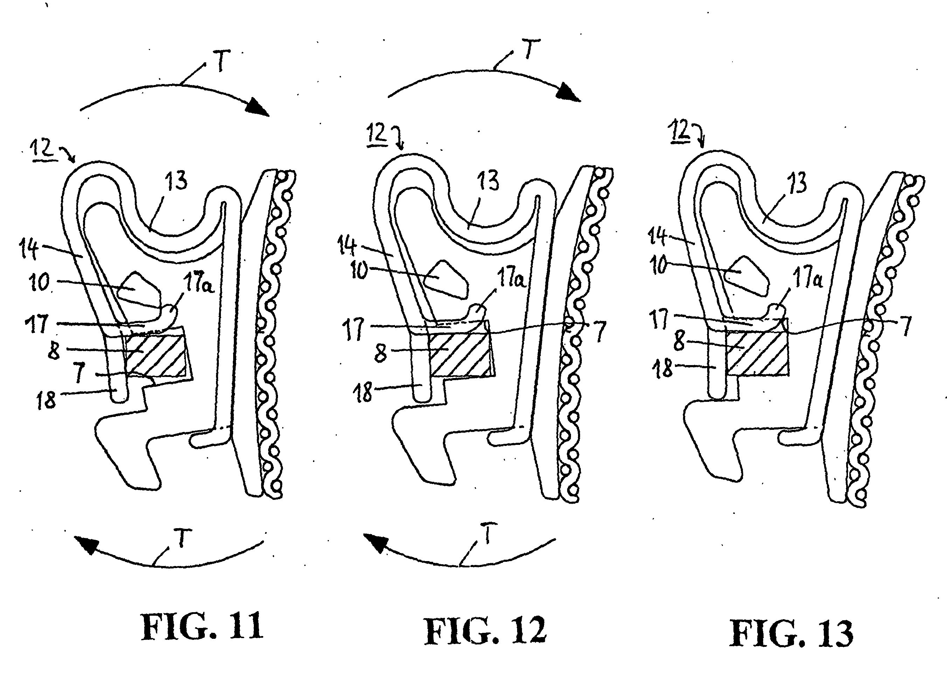

Eine alternative Ausführungsform, die in zwei voneinander unabhängigen Merkmalen von dem bislang gezeigten und erläuterten Bracket abweicht, ist in Fig. 11 gezeigt. Bei diesem Bracket schließt sich am oberen Ende des Schlitzes 7 auf der inzisalen Seite eine Schulter an, auf der die Fahnen 18 aufliegen können. Bis zu einem Richtdrahtquerschnitt, der den Schlitz 7 nicht vollständig ausfüllt, drücken daher die Fahnen 18 nicht auf den Richtdraht 8.

Das zweite abweichende Merkmal betrifft die Schließfeder 12, die am unteren Ende des Bogens 13 eine Verlängerung hat, die so lang ausgeführt ist, dass sie einen im Bracketaufbau ausgebildeten, sich quer zum Schlitz 7 ausgebildeten flachen Kanal 11' vollständig durchdringt, aus diesem hervorsteht und dort durch Umbiegen des Federendes gesichert ist.

Weiter zeigt die Fig. 11 in Zusammenschau mit den Fig. 12 und 13 einen weiteren Vorteil, den man mit dem erfindungsgemäßen Bracket erzielen kann, indem die Zunge zusammen mit einer Vorspannung der Schließfeder als Instrument zur Aufbringung von Richtkräften an einem Richtdraht verwendet wird.

Die Figuren 11 bis 13 zeigen das erfindungsgemäße Bracket bei Verwendung mit einem Richtdraht 8 rechteckigen Querschnitts. Richtdrähte mit rechteckigen Querschnitt werden gegen Ende einer kieferorthopädischen Behandlung mit Brackets eingesetzt, wenn die Zahnfehlstellung aufgrund des Fortschritts der kieferorthopädischen Behandlung bereits soweit korrigiert worden ist, dass Richtdrähte kleineren Querschnitts, insbesondere runden Querschnitts, nicht mehr in der Lage sind, diejenigen Drehmomente an den Zähnen hervorzurufen, die notwendig sind, um die Zähne in die gewünschte Endstellung zu bringen.

Im Rahmen einer kieferorthopädischen Behandlung ist es mitunter notwendig, die Zähne nicht nur in eine im Wurzelbereich liegende Achse zu verschwenken, sondern gegebenenfalls um eine Achse, die im Bereich der Zahnkrone liegt. Ein Richtdraht rechteckigen Querschnitts kann in Kombination mit einem Bracket, dessen Schlitz ebenfalls rechteckigen Querschnitt hat, an den mit diesem Bracket versehenen Zahn ein Drehmoment hervorrufen, das im Bereich der Zahnkrone liegt. Dieses soll unter Bezugnahme auf die Figuren 11 bis 13 erläutert werden.

Bei einer mit einer Serie von Brackets versehenen Zahnreihe beispielsweise eines Oberkiefers verläuft der Richtdraht durch die Schlitze aller Brackets. Seine Stellung innerhalb der Bracketschlitze ist demzufolge nicht nur durch das individuelle Bracket bestimmt, sondern durch das Zusammenwirken sämtlicher Brackets, die ihrerseits durch die Stellung aller Zähne in der betreffenden Zahnreihe bestimmt ist. Die Zähne richten sich also durch die an den Richtdraht wechselseitig wirkenden Kräfte gegenseitig aus.

In Fig. 11 ist aufgrund der Fehlstellung des mit dem dargestellten Bracket versehenen (nicht dargestellten) Zahns der Richtdraht 8 in dem Schlitz 17 so verkantet, dass sich zwischen den Außenflächen des Richtdrahtes 8 und den den Schlitz 7 begrenzenden Flächen keilförmige Zwischenräume ergeben. Die Schließfeder 12 übt mit den seitlichen Fahnen 18 und der Zunge 17 auf den Richtdraht 8 Kräfte aus, die ihn auf den Grund des Schlitzes 7 und in Anlage an die der Zunge 17 gegenüberliegende Schlitzwand drücken wollen. Diese Kräfte bewirken, dass auf das Bracket insgesamt ein Drehmoment ausgeübt wird, das in Fig. 11 mit den Pfeilen T dargestellt ist.

Mit fortschreitender Einwirkung dieses Drehmomentes T auf den betreffenden, mit dem Bracket verbundenen Zahn gibt der Zahn ein wenig nach, so dass sich die Verkantung des Richtdrahtes 8 innerhalb des Bracketschlitzes 7 verkleinert. Dieser verkleinerte Zustand der Verkantung ist in Fig. 12 dargestellt. Mit weiterem Fortschreiten der Einwirkung des Drehmoments wird schließlich ein Zustand erreicht, der in Fig. 13 dargestellt ist, in dem der Richtdraht 8 auf dem Grund des Schlitzes 7 flächig aufliegt und weiterhin an der der Zunge 17 gegenüberliegenden Begrenzungswand des Schlitzes 7 flächig anliegt. Die Folge ist also, dass die in Fig. 11 noch relativ steile Stellung des Bracket in eine weiter geneigte Stellung nach Fig. 13 geändert worden ist, mithin die Stellung des mit dem Bracket verbundenen Zahns entsprechend geändert worden ist.

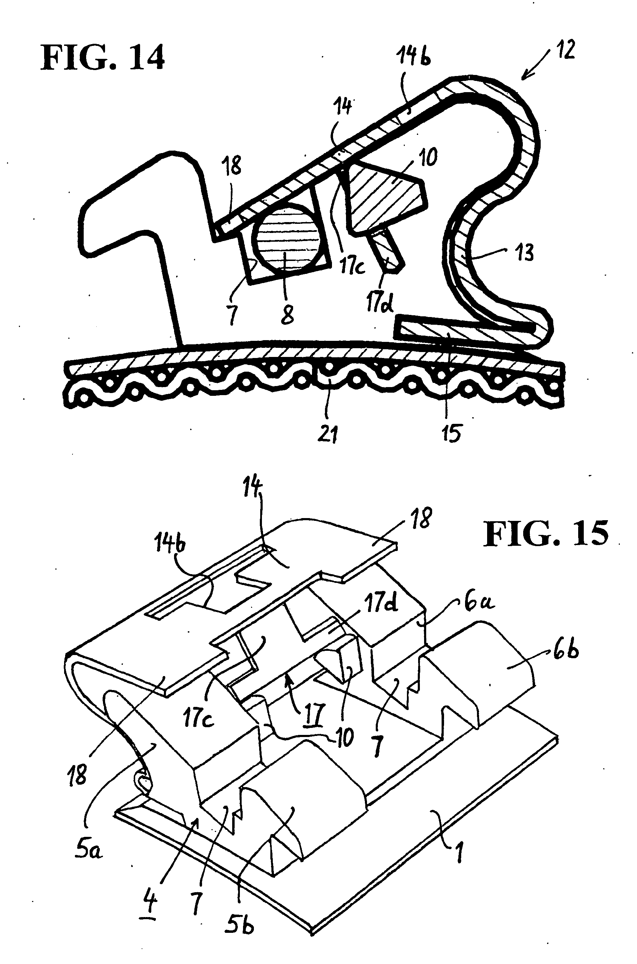

Die Fig. 14 und 15 zeigen eine besonders vorteilhafte Ausführungsform der Erfindung. Bei dieser Ausführungsform hat, wie deutlich aus Fig. 15 zu entnehmen ist, die Zunge 17 einen an der Zungenwurzel ansetzenden Halsabschnitt 17c, der eine Breite aufweist, die kleiner ist, als der Abstand zwischen den Vorsprüngen 10 an den gingivalen Flügelabschnitten 5a, 6a. An den Halsabschnitt 17c schließt sich ein verbreiterter Endabschnitt 17d an, dessen Breite größer ist, als der Abstand der Vorsprünge 10 voneinander, aber kleiner ist, als der Abstand der gingivalen Flügelabschnitte 5a, 6a voneinander. Insgesamt ist die Zunge 17 flach und ist ein aus dem freien Schenkel 14 der Schließfeder 12 in Richtung nach vorn unten ausgeklinkt, so dass im freien Schenkel 14 eine T-förmige Öffnung 14b verbleibt.

Wie Fig. 15 zeigt, kann sich der verbreiterte Endabschnitt 17d der Zunge im geöffneten Zustand der Schließfeder 12 auf den beiden Vorsprüngen 10 abstützen und so die Schließfeder 12 in ihrer Öffnungsstellung halten. Andererseits kann beim Übergang in die Schließstellung, die in Fig. 14 dargestellt ist, der Halsabschnitt 17c zwischen den beiden Vorsprüngen 10 hindurch gleiten, so dass der breite Endabschnitt 17d unter die Vorsprünge 10 greift und die Schließfeder 12 in ihrer Schließstellung verriegelt. Durch die T-förmige Öffnung 14a hindurch kann der Kieferorthopäde einem geeigneten stiftförmigen Werkzeug die Zunge 17 aus ihrer Verriegelungsstellung drücken, um die Schließfeder 12 zu öffnen.

Der besondere Vorteil dieser Ausführungsform liegt in der geringeren Anzahl der Biegevorgänge, die für die Herstellung der Schließfeder erforderlich sind. Außerdem kann der Abstand zwischen den Vorsprüngen und dem Bracketschlitz minimal gehalten werden. Er muss nur so groß wie die Federdicke sein, eine Federkrümmung braucht nicht berücksichtigt zu werden. Schließlich ist auch die Sicherungsfunktion verbessert, da der breite Zungenabschnitt unter den Vorsprüngen liegt.

Es sei an dieser Stelle erwähnt, dass alternativ der breitere Endabschnitt 17d der Zunge 17 auch nach Art der Zunge der erstgenannten Ausführungsformen mit einem umgebogenen Endabschnitt versehen sein kann. Ferner ist anzumerken, dass bei der Ausführungsfrom nach den Fig. 14 und 15 die Zunge 17 so aus dem freien Schenkel 14 der Schließfeder 12 ausgeklinkt und abgewinkelt sein kann, wie es für die erstgenannten Ausführungsformen oben anhand der Fig. 4 gezeigt und beschrieben wurde.

Es ist abschließend zu erwähnen, dass alle Flügelabschnitte in einander entgegengesetzten Richtungen auskragen oder überhängen können, wie in den Zeichnungen dargestellt, was es möglich macht, in üblicher Weise Ligaturen anzubringen, wenn dieses aus besonderen Gründen erwünscht sein sollte, insbesondere zu Beginn einer kieferorthopädischen Behandlung, wenn der auf den Richtdraht wirkende Druck der Schließfeder 12 nicht ausreichend sein sollte, um ein sicheres Festhalten des Richtdrahtes im Schlitz zu bewirken.

## Patentansprüche

1. Bracket für kieferorthopädische Behandlung, bestehend aus:
einer Grundplatte (1), die eine zur Befestigung an einem Zahn bestimmte Unterseite (2) und eine Oberseite (3) aufweist, auf der sich ein Aufbau (4) erhebt, der zwei in gegenseitigem Abstand angeordnete Flügel (5,6) aufweist, die jeweils von einem länglichen, beide Flügel (5,6) fluchtend durchdringenden Schlitz (7) unterbrochen sind, der die Flügel (5,6) jeweils in einen gingivalen und einen inzisalen Abschnitt (5a,6a;5b,6b) unterteilt und der zur Aufnahme eines Richtdrahtes geeignet ist, und aus
einer Schließfeder (12) aus einem bandförmigen Material, die an dem Aufbau (4) verankert ist, einen sich über die gingivalen Flügelabschnitte (5a,6a) erstreckenden Bogen (13) sowie einen sich an den Bogen (13) anschließenden freien Schenkel (14) aufweist und zwischen einer Öffnungsstellung, in der der Schlitz (7) zwischen den Flügelabschnitten (5a,5b;6a,6b) frei zugänglich ist, und einer Schließstellung, in der der freie Schenkel (14) den Schlitz (7) überdeckt, beweglich ist,
**dadurch gekennzeichnet, dass**
die von dem Bogen (13) der Schließfeder (12) überdeckten gingivalen Flügelabschnitte (5a,6a) des Aufbaus (4) an den einander zugewandten Seiten jeweils einen Vorsprung (10) aufweisen,
die Vorsprünge (10) freie Enden haben, die sich in einem vorgegebenen Abstand einander gegenüber stehen,
der freie Schenkel (14) der Schließfeder (12) im mittleren Bereich eine Zunge (17) aufweist, die gegenüber benachbarten seitlichen Abschnitten (18) im wesentlichen rechtwinkelig in Richtung auf die Oberseite (3) der Grundplatte (1) abgewinkelt ist,
die abgewinkelte Zunge (17) wenigstens an ihrem freien Ende eine Breite hat, die kleiner ist, als der Abstand der einander gegenüberstehenden Flächen, die den Zwischenraum (9) zwischen den gingivalen Flügelabschnitten (5a,6a) begrenzen, und größer ist, als der Abstand zwischen den freien Enden der Vorsprünge (10), im übrigen aber nicht breiter als an ihrem freien Ende ist.

2. Bracket nach Anspruch 1, **dadurch gekennzeichnet, dass** die abgewinkelte Zunge (17) einen Endabschnitt (17a) aufweist, der in Richtung auf den Bogen (13) der Schließfeder (12) umgebogen ist und in geschlossener Stellung der Schließfeder (12) tiefer liegt, als eine untere Kante der genannten Vorsprünge (10).

3. Bracket nach Anspruch 1 oder 2, **dadurch gekennzeichnet, dass** die Zunge (17) im Bereich ihrer Wurzel einen nicht abgewinkelten Abschnitt (17b) aufweist, der gegenüber dem freien Schenkel (14) der Schließfeder (12) beidseitig jeweils durch einen längslaufenden Einschnitt (14a) abgegrenzt ist.

4. Bracket nach Anspruch 1, **dadurch gekennzeichnet, dass** die abgewinkelte Zunge (17) von ihrer Wurzel ausgehend einen Halsabschnitt (17c) aufweist, der schmaler ist, als der Abstand zwischen den freien Enden der Vorsprünge (10), und im Anschluss daran einen breiteren Endabschnitt (17d) hat, der im geschlossenen Zustand der Schließfeder (12) unter den Vorsprüngen (10) liegt.

5. Bracket nach einem der vorhergehenden Ansprüche, **dadurch gekennzeichnet, dass** in der Schließfeder (12) ein Loch (20) benachbart dem abgewinkelten, mittleren Abschnitt (17) des freien Schenkels (14) ausgebildet ist.

6. Bracket nach einem der Ansprüche 1 bis 4, **dadurch gekennzeichnet, dass** die Zunge (17) als ein am freien Schenkel (14) der Schließfeder (12) nach rückwärts ausgeklinkter, im freien Schenkel (14) eine Öffnung (14b) hinterlassender Abschnitt der Schließfeder (12) ausgebildet ist.

7. Bracket nach einem der vorhergehenden Ansprüche, **dadurch gekennzeichnet, dass** die Schließfeder (12) an einem dem freien Schenkel (14) abgewandten Ende des Bogens (13) einen Verlängerungsschenkel (15) aufweist, der an dem Aufbau (4) fest verankert ist.

8. Bracket nach Anspruch 7, **dadurch gekennzeichnet, dass** in dem Aufbau (4) oberhalb der Oberseite (3) der Grundplatte (1), jedoch unterhalb des Schlitzes (7) ein flacher, den Aufbau (4) durchdringender, durchgehender Kanal (11) ausgebildet ist, der Verlängerungsschenkel (15) der Schließfeder (12) schmaler als der Bogen (13) ausgebildet und in dem Kanal (11) angeordnet ist, und dass der Verlängerungsschenkel (15) ein freies Ende (16) aufweist, das aus dem Kanal (11) vorsteht und umgebogen ist, um den Verlängerungsschenkel (15) in dem Kanal (11) zu sichern.

9. Bracket nach Anspruch 7, **dadurch gekennzeichnet, dass** an dem Aufbau (4) unterhalb der von dem Bogen (13) der Schließfeder (12) überdeckten gingivalen Flügelabschnitte (5a,6a) ein Einsteckschlitz (11a) ausgebildet ist, in den der Verlängerungsschenkel (15') eingesteckt ist und in dem der Verlängerungsschenkel (15') durch Verschweißung, Verlötung oder Verstemmung gesichert ist.

10. Bracket nach einem der vorhergehenden Ansprüche, **dadurch gekennzeichnet, dass** an den inzisalen Flügelabschnitten (5b,6b) des Aufbaus (4) benachbart dem Schlitz (7) jeweils eine Schulter (19) ausgebildet ist, auf denen in der Schließstellung der Schließfeder zwei nicht umgebogene, seitliche Endabschnitte (18) der Schließfeder (12) aufliegen.

11. Bracket nach einem der vorhergehenden Ansprüche, **dadurch gekennzeichnet, dass** die Vorsprünge (10) jeweils eine Oberseite (22) aufweisen, die von einer Scheitelkante ausgehend in einer Richtung schräg geneigt ist, die sich von dem Schlitz (7) weg erstreckt.

12. Bracket nach einem der vorhergehenden Ansprüche, **dadurch gekennzeichnet, dass** zwischen den Vorsprüngen (10) und dem Schlitz (7) ein lichter Abstand vorhanden ist, der wenigstens so groß ist, wie eine Materialdicke der Schließfeder (12).

## Claims

1. Bracket for orthodontic treatment consisting of:
a base plate (1), which has an underside (2) intended for attachment to a tooth and an upper side (3), on which a structure (4) is raised which has two wings (5, 6) arranged at mutual distance which are interrupted in each case by an elongated slot (7) penetrating both wings (5, 6) in aligned manner, which slot (7) divides the wings (5, 6) in each case into a gingival and an incisal section (5a, 6a; 5b, 6b) and which is suitable for receiving a directional wire, and of
a closing spring (12) made from a band-like material which is anchored on the structure (4), an arc (13) extending over the gingival wing sections (5a, 6a) and has a free limb (14) connected to the arc (13) and can be moved between an open position, in which the slot (7) is freely accessible between the wing sections (5a, 5b; 6a, 6b), and a closed position, in which the free limb (14) covers the slot (7),
**characterised in that**
the gingival wing sections (5a, 6a) of the structure (4) covered by the arc (13) of the closing spring (12) have on the sides facing one another in each case a projection (10),
the projections (10) have free ends which are opposite one another at a preset distance,
the free limb (14) of the closing spring (12) has in the central region a tongue (17) which is bent essentially at right-angles in the direction of the upper side (3) of the base plate (1) with respect to adjacent lateral sections (18),
the bent tongue (17) has, at least at its free end, a width which is less than the distance of the surfaces opposite one another which define the gap (9) between the gingival wing sections (5a, 6a), and is greater than the distance between the free ends of the projections (10), but incidentally is not wider than at its free end.

2. Bracket according to claim 1, **characterised in that** the bent tongue (17) has an end section (17a) which is curved in the direction of the arc (13) of the closing spring (12) and lies deeper in closed position of the closing spring (12) than a lower edge of the said projections (10).

3. Bracket according to claim 1 or 2, **characterised in that** the tongue (17) has in the region of its root, a non-bent section (17b) which is delimited on both sides in each case by a longitudinally running incision (14a) with respect to the free limb (14) of the closing spring (12).

4. Bracket according to claim 1, **characterised in that** the bent tongue (17) has, starting from its root, a neck section (17c) which is narrower than the distance between the free ends of the projections (10), and after that has a wider end section (17d) which lies below the projections (10) in the closed state of the closing spring (12).

5. Bracket according to one of the preceding claims, **characterised in that** a hole (20) adjacent the bent, central section (17) of the free limb (14) is formed in the closing spring (12).

6. Bracket according to one of claims 1 to 4, **characterised in that** the tongue (17) is formed as a section of the closing spring (12) leaving behind an opening (14b) in the free limb (14) and rearwardly released on the free limb (14) of the closing spring (12).

7. Bracket according to one of the preceding claims, **characterised in that** the closing spring (12) has on an end of the arc (13) facing away from the free limb (14), an extension limb (15) which is anchored firmly on the structure (4).

8. Bracket according to claim 7, **characterised in that** a flat continuous channel (11) penetrating the structure (4) is formed in the structure (4) above the upper side (3) of the base plate (1), but below the slot (7), the extension limb (15) of the closing spring (12) is designed to be narrower than the arc (13) and is arranged in the channel (11), and **in that** the extension limb (15) has a free end (16) which projects from the channel (11) and is curved to secure the extension limb (15) in the channel (11).

9. Bracket according to claim 7, **characterised in that** an insertion slot (11a), into which the extension limb (15') is inserted and in which the extension limb (15') is secured by welding, soldering or calking, is formed on the structure (4) below the gingival wing sections (5a, 6a) covered by the arc (13) of the closing spring (12).

10. Bracket according to one of the preceding claims, **characterised in that** in each case a shoulder (19), on which two non-curved, lateral end sections (18) of the closing spring (12) rest in the closed position of the closing spring, is formed on the incisal wing sections (5b, 6b) of the structure (4) adjacent the slot (7).

11. Bracket according to one of the preceding claims, **characterised in that** the projections (10) have in each case an upper side (22) which, starting from an apex edge, is inclined at an angle in a direction which extends away from the slot (7).

12. Bracket according to one of the preceding claims, **characterised in that** a clear distance, which is at least as great as a material thickness of the closing spring (12), is present between the projections (10) and the slot (7).

## Revendications

1. Bracket pour traitement orthopédique de la mâchoire, constitué :
d'une plaque de base (1) qui présente une face inférieure (2) destinée à la fixation sur une dent et une face supérieure (3), sur laquelle s'élève un montage (4) qui comporte deux ailettes (5, 6), disposées à distance mutuelle et respectivement interrompues par une fente (7) allongée, qui traverse en alignement les deux ailettes (5, 6), laquelle fente subdivise chacune des ailettes (5, 6) en une section gingivale et en une section incisive (5a, 6a ; 5b, 6b) et se prête au logement d'un fil redresseur, et
d'un ressort de fermeture (12) en un matériau en forme de bande, qui est ancré sur le montage (4), présente un arc (13) s'étendant sur les sections d'ailettes gingivales (5a, 6a), ainsi qu'une branche libre (14) se raccordant à l'arc (13), et est mobile entre une position d'ouverture, dans laquelle la fente (7) entre les sections d'ailettes (5a, 5b ; 6a, 6b) est librement accessible, et une position de fermeture, dans laquelle la branche libre (14) recouvre la fente (7),
**caractérisé en ce que**
les sections d'ailettes gingivales (5a, 6a) du montage (4), recouvertes par l'arc (13) du ressort de fermeture (12), présentent chacune sur les côtés tournés l'un vers l'autre une saillie (10),
les saillies (10) ont des extrémités libres, qui se situent en vis-à-vis à une distance prédéfinie,
la branche libre (14) du ressort de fermeture (12) présente dans la zone centrale une languette (17), qui est coudée par rapport à des sections latérales voisines (18) essentiellement en angle droit en direction de la face supérieure (3) de la plaque de base (1),
la languette coudée (17) a au moins sur son extrémité libre une largeur, qui est plus petite que la distance des surfaces en vis-à-vis mutuel délimitant l'espace intermédiaire (9) entre les sections d'ailettes gingivales (5a, 6a), et plus grande que la distance entre les extrémités libres des saillies (10), mais au demeurant pas plus large que sur son extrémité libre.

2. Bracket suivant la revendication 1, **caractérisé en ce que** la languette coudée (17) présente une section extrême (17a), qui est pliée en direction de l'arc (13) du ressort de fermeture (12) et est plus basse, en position de fermeture du ressort (12), qu'une arête inférieure des saillies (10) citées.

3. Bracket suivant l'une des revendications 1 et 2, **caractérisé en ce que** la languette (17) présente dans la zone de sa racine une section (17b) non coudée, qui est délimitée bilatéralement, par rapport à la branche libre (14) du ressort de fermeture (12), par une entaille (14a) longitudinale.

4. Bracket suivant la revendication 1, **caractérisé en ce que** la languette coudée (17) présente à partir de sa racine une section de col (17c), qui est plus étroite que la distance entre les extrémités libres des saillies (10) et à laquelle se raccorde une section extrême plus large (17d), qui se situe au-dessous des saillies (10) dans l'état de fermeture du ressort de fermeture (12).

5. Bracket suivant l'une des revendications précédentes, **caractérisé en ce qu'**un trou (20) est réalisé dans le ressort de fermeture (12) au voisinage de la section centrale coudée (17) de la branche libre (14).

6. Bracket suivant l'une des revendications 1 à 4, **caractérisé en ce que** la languette (17) est configurée sous forme d'une section du ressort de fermeture (12), encochée vers l'arrière sur la branche libre (14) du ressort de fermeture (12) et laissant une ouverture (14b) dans la branche libre (14).

7. Bracket suivant l'une des revendications précédentes, **caractérisé en ce que** le ressort de fermeture (12) présente, sur une extrémité de l'arc (13) opposée à la branche libre (14), une branche de prolongement (15) qui est ancrée solidementsur le montage (4).

8. Bracket suivant la revendication 7, **caractérisé en ce qu'**un canal continu plat (11), traversant le montage (4), est réalisé dans le montage (4) au-dessus de la face supérieure (3) de la plaque de base (1), mais au-dessous de la fente (7), la branche de prolongement (15) du ressort de fermeture (12) a une configuration plus étroite que l'arc (13) et est disposée dans le canal (11), et que la branche de prolongement (15) présente une extrémité libre (16), qui est pliée et dépasse du canal (11) pour bloquer la branche de prolongement (15) dans le canal (11).

9. Bracket suivant la revendication 7, **caractérisé en ce qu'**une fente d'emboîtement (11a) est réalisée sur le montage (4) au-dessous des sections d'ailettes gingivales (5a, 6a) recouvertes par l'arc (13) du ressort de fermeture (12), fente dans laquelle est emmanchée la branche de prolongement (15') et dans laquelle la branche de prolongement (15') est bloquée par soudage, brasage ou matage.

10. Bracket suivant l'une des revendications précédentes, **caractérisé en ce qu'**un épaulement (19) est respectivement réalisé sur les sections d'ailettes incisives (5b, 6b) du montage (4), au voisinage de la fente (7), épaulements sur lesquels s'appliquent deux sections extrêmes latérales (18), non pliées, du ressort de fermeture (12) dans la position de fermeture de ce dernier.

11. Bracket suivant l'une des revendications précédentes, **caractérisé en ce que** les saillies (10) présentent chacune une face supérieure (22), qui est inclinée en oblique à partir d'une arête de sommet dans une direction s'étendant à l'écart de la fente (7).

12. Bracket suivant l'une des revendications précédentes, **caractérisé en ce qu'**un écartement libre est présent entre les saillies (10) et la fente (7)., lequel écartement est au moins aussi élevé qu'une épaisseur de matériau du ressort de fermeture (12).
